# EUROPEAN PATENT APPLICATION

(11) **EP 2 003 588 A2**
(43) Date of publication of application: **17.12.2008**
(21) Application number: 08251671.7
(22) Date of filing: 12.05.2008
(51) Int. Cl.: G06F 21/00

(54) **Content distribution system, distribution server, receiving terminal, and computer readable medium**

(30) Priority: 08.06.2007 JP 2007153388
(71) Applicant: Sony Corporation, Tokyo (JP)
(72) Inventor: Hanai, Tomoyuki, Tokyo (JP)
(74) Representative: Merryweather, Colin Henry

(57) **Abstract**

A system and method for distributing content data and license information. A distribution server includes a transmitting section for transmitting the content data and the license information, including information regarding a time limit that indicates a period for reproducing the content data, to the one or more receiving terminals. The distribution server also includes a request receiving section for receiving, from the one or more receiving terminals, a request for the content data and a request for the license information a second time without the content data, wherein the request for the license information a second time is transmitted in response to a notice indicating the status of the license information.

## Description

The present invention relates to a content distribution system, a distribution server, a receiving terminal, and a computer readable medium.

Content distribution services may be used for distributing content data, including movies, music, software, over a network such as the Internet. Generally, a content distribution service may comprise a distribution server and a user terminal which are connected to the network. The distribution server may store content data and may distribute the content data in accordance with access from the user terminal. The user terminal may access the distribution server to download the content data.

For example, as a technique of downloading content data from the distribution server, JP-A-2000-311416 discloses a technique in which a predetermined item of unnecessary data can be erased automatically among items of content data stored in a receiving terminal.

Content data downloaded by a receiving terminal may contain a viewing time limit, such as a rental model where the time period for reproduction and the number of reproductions is restricted. In this example, a content distributor can offer content distribution services for the user with a reduced purchase cost like a rental fee for a rental video, as compared with the case of distributing content data with no viewing time limit.

However, in the case in which content data is downloaded for reproduction, it is necessary to download the content data before reproduction begins because it is not possible to reproduce the content data during downloading. Therefore, when a large amount of data is downloaded, or when a user uses a low speed line, a downloading time period is prolonged and takes much time before a user can view the content data. In addition, since downloaded content data is normally automatically erased from a recording medium on a receiving terminal when a viewing time limit has expired, a user cannot reproduce the content data after expiration.

Therefore, in the case in which a user is not able to view downloaded content data within a viewing time limit, it is necessary for the user to again download the same content data because the content data is automatically erased from a recording medium on a receiving terminal. In addition, in the case in which a user desires to again view the same content data after a first time purchase period is expired, the user must download the same content data again. This results in an increased content data reproduction time.

Embodiments of the present invention encompass methods, apparatus, and computer readable mediums for distributing content data and license information.

Additional objects and advantages of the invention will be set forth in part in the description which follows, and in part will be obvious from the description, or may be learned by practice of the invention. The objects and advantages of the invention will be realized and attained by means of the elements and combinations particularly pointed out in the appended claims.

In one exemplary embodiment, there is provided a method for distributing content data to one or more receiving terminals. The method includes transmitting the content data and the license information, including information regarding a time limit that indicates a period for reproducing the content data, to the one or more receiving terminals. The method also includes receiving, from the one or more receiving terminals, a request for the content data and a request for the license information a second time without the content data, wherein the request for the license information a second time is transmitted in response to a notice indicating the status of the license information.

In another exemplary embodiment, there is provided a method for receiving content data from a distribution server. The method includes sending a first request, the first request being for the content data, receiving the content data and license information, including information regarding a time limit that indicates a period for reproducing the content data, storing the content data and license information, reproducing the content data during a period of reproduction corresponding to the license information. The method also includes sending a second request, the second request being for the license information without the content data, wherein the second request is transmitted in response to a notice indicating the status of the license information.

It is to be understood that both the foregoing general description and the following detailed description are exemplary and explanatory only and are not restrictive of the invention, as described. Further features and/or variations may be provided in addition to those set forth herein. For example, the present invention may be directed to various combinations and subcombinations of the disclosed features and/or combinations and subcombinations of several further features disclosed below in the detailed description.

The accompanying drawings, show certain aspects of implementations consistent with the present invention and, together with the description, help explain some of the principles associated with the invention. In the drawings:
FIG. 1 illustrates a block diagram of an exemplary content distribution system, consistent with certain aspects related to the present invention;
FIG. 2 illustrates an exemplary receiving terminal, consistent with certain aspects related to the present invention;
FIG. 3A-3B illustrate flow charts depicting the operation of the content distribution system, consistent with certain aspects related to the present invention;
FIG. 4 illustrates a download sequence of the content distribution system, consistent with certain aspects related to the present invention;
FIG. 5A-6B illustrate sequences of the management of the content data of the content distribution system, consistent with certain aspects related to the present invention;
FIG. 7 illustrates a reproduction sequence of downloaded content, consistent with certain aspects related to the present invention; and
FIG. 8 illustrates windows displayed on a screen of a display device connected to the receiving terminal, consistent with certain aspects related to the present invention.

The following detailed description refers to the accompanying drawings. Wherever possible, the same reference numbers are used in the drawings and the following description to refer to the same or similar parts. While several exemplary embodiments and features of the invention are described herein, modifications, adaptations and other implementations are possible, without departing from the spirit and scope of the invention. For example, substitutions, additions or modifications may be made to the components illustrated in the drawings, and the exemplary methods described herein may be modified by substituting, reordering or adding steps to the disclosed methods. Accordingly, the following detailed description does not limit the invention. Instead, the proper scope of the invention is defined by the appended claims.

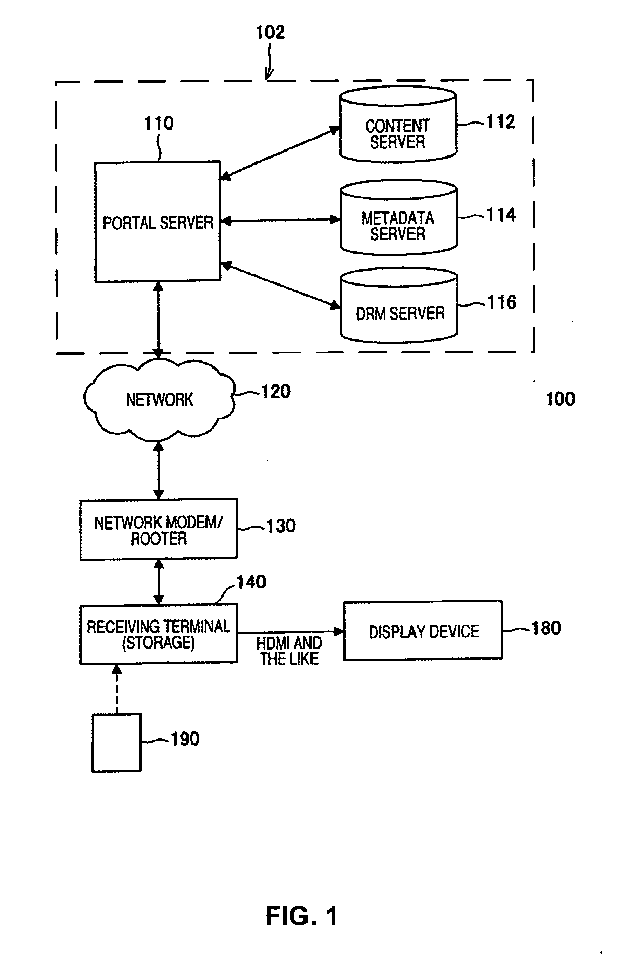

FIG. 1 illustrates a block diagram depicting a content distribution system 100. Content distribution system 100 may distribute content data, including, for example, movies, music, sports, software, over a network such as the Internet. Content distribution system 100 may contain a distribution server 102 and a receiving terminal 140 (i.e. a user terminal) which may be connected to network 120. Content distribution system 100 may implement content distribution services in which content data is distributed to receiving terminal 140 and receiving terminal 140 may download the content data.

Network 120 may be a wide area IP network, for example, in which Internet protocol (IP) techniques are used to mutually connect computers to the network. Network 120 may also include closed domain networks. A network modem/rooter 130 may be connected between network 120 and receiving terminal 140. Network modem/rooter 130 may modulate and demodulate digital signals and analog signals between network 120 and receiving terminal 140. Network modem/rooter 130 may also connect or relay different computer networks (i.e. controls routes).

As depicted in FIG. 1, distribution server 102 may contain portal server 110, content server 112, metadata server 114, and Digital Rights Management (DRM) server 116. Distribution server 102 may be configured of separate computer servers such as portal server 110, content server 112, metadata server 114, and DRM server 116. However, distribution server 102 may be configured of a computer server that is a single piece of hardware having all of the functions of portal server 110, content server 112, metadata server 114, and DRM server 116. Moreover, portal server 110, content server 112, metadata server 114, and DRM server 116 may each be configured of one or more pieces of hardware. Portal server 110, content server 112, metadata server 114, and DRM server 116 may each contain a Central Processing Unit (CPU), memory, storage, input/output interface (IF), communication IF, and display part.

The CPU may function as a processor and a control unit that may control processes of all components provided on each server. The memory may contain a storage part (i.e. a RAM (Random Access Memory), a ROM (Read Only Memory), and a cache memory) that may temporarily store data relating to the process of the CPU. The storage part may be implemented by, for example, any combination of a hard disk drive (HDD) and flash memory. The storage part may store data including, for example, user information, terminal performance information, network line information, and a program.

The input/output IF may contain a mouse, keyboard, touch panel, buttons, one or more switches, lever, and an input control part that may generate input signals and may output them to the CPU. For example, an administrator of distribution server 102 may manipulate the manipulating part of the input/output IF to input data into individual servers or instruct the processing operation of the individual servers.

Communication IF may contain, for example, communication lines, a communication circuit, and a communication device. Communication IF may send and receive data between individual servers or between the servers and receiving terminal 140 over network 120.

The display part may contain, for example, a display device, such as a liquid crystal display (LCD) device, a CRT display device, and a lamp, that may display video signals and a sound output unit, such as a speaker, that may output sound signals. The administrator of distribution server 102 may confirm the manipulation result of the input/output IF through the display part.

Portal server 110 may offer navigation information regarding a description of the contents used by content distribution services to receiving terminal 140. Portal server 110 may receive a request, or access, from receiving terminal 140 and may send data from receiving terminal 140 to content server 112, metadata server 114, and DRM server 116 in accordance with the request. In addition, portal server 110 may receive data from content server 112, metadata server 114, and DRM server 116 and may send the data to receiving terminal 140 over network 120. In addition, the CPU of portal server 110 may include a transmitting part that may transmit content data to receiving terminal 140.

Content server 112 may store content data including, for example, movies, music, sports, pictures, and software, and may send the content data to receiving terminal 140 through portal server 110 in accordance with a request from receiving terminal 140.

For example, if content server 112 sends video contents such as movies and sports, content server 112 may encode the content data in accordance with the MPEG-1 Audio Layer-2 (MPEG-2), MPEG-1 Audio Layer-4 (MPEG-4), or a QuickTime system and may send the content data to receiving terminal 140.

When content server 112 sends contents relating to sound and music, for example, content server 112 may encode the content data in accordance with, for example, an MPEG-1 Audio Layer-3 (MP3) system, an Adaptive Transform Acoustic Coding (ATRAC) system and may send the content data to receiving terminal 140. However, the coding system is not restricted to the examples above.

Content server 112 may also send a reproduction control metafile to receiving terminal 140. The reproduction control metafile may be used when receiving terminal 140 stores the content data and reproduces the content data. In an example regarding video contents, the reproduction control metafile may contain time data that may indicate a starting point of one or more chapters of the content and one or more highlights of the content.

Metadata server 114 may store metadata relating to the stored content data and may send the metadata to receiving terminal 140 upon request. By way of example, metadata may be data relating to contents including a title, creation date, time, cast, synopsis, genre, and distributable period of the contents.

DRM server 116 may manage a DRM of the contents. DRM server 116 may receive an issuance request for a license relating to content data from receiving terminal 140, determine whether receiving terminal 140 satisfies license issuance conditions, and issue the license to receiving terminal 140. Generally, in receiving terminal 140, it is not possible to reproduce individual contents using only the content data from content server 112, and reproduction may be allowed when user conditions for obtaining an adequate license are satisfied. Methods generally used can be adapted to DRM, omitting the detailed descriptions. In DRM, however, methods other than those described above may be used.

The license may include reproduction time limit information that may contain a reproduction time limit that may limit reproduction of content data downloaded by receiving terminal 140. The reproduction time limit may be a period of time that allows reproduction, such as a date, or a number of times for allowing reproduction. For example, the period of reproduction may be a predetermined period that begins when receiving terminal 140 receives the content data, regardless of the date and time that receiving terminal 140 receives the content data. The number of times for allowing reproduction may be a predetermined number of times of reproduction that receiving terminal 140 can reproduce the downloaded content data.

The CPU of DRM server 116 may include a transmitting part and a request accepting part. The transmitting part may send the license including the reproduction time limit information to receiving terminal 140. The request accepting part may receive a request for distribution of the reproduction time limit information that is sent by receiving terminal 140 based on a user confirmation. The request accepting part may also receive the request for distribution and send a signal to the transmitting part. The transmitting part may send the license to receiving terminal 140 based on the request.

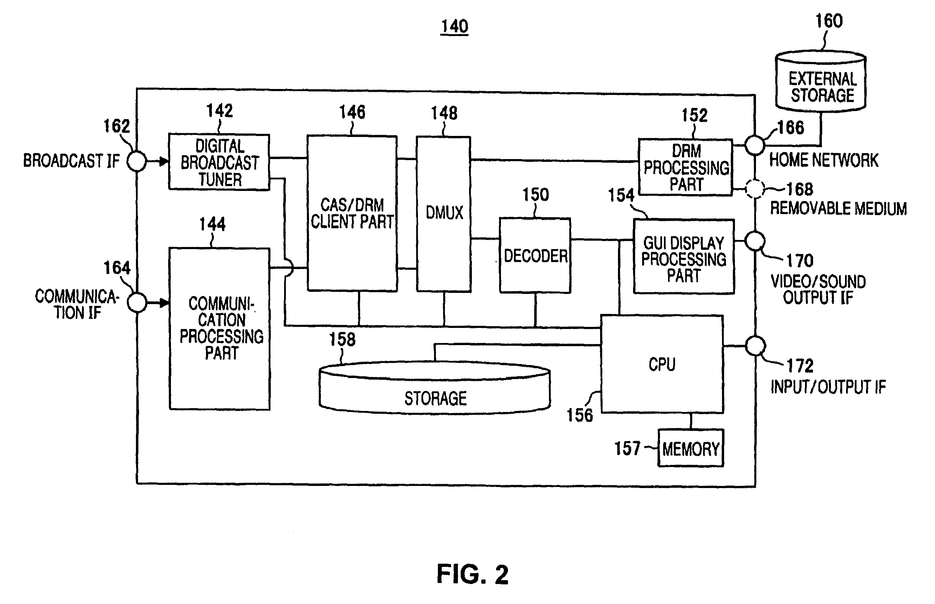

Receiving terminal 140 may be connected to network 120. Network 120 may be, for example, a personal computer, a tuner having a radio receiver, a television set, or a set-top box that may receive IP broadcasts viewable over cable television, television broadcasting, or a network. As depicted in FIG. 2, receiving terminal 140 may contain CPU 156, memory 157, storage 158, and communication IF 164.

Receiving terminal 140 may send a request for the content data to portal server 110 over network 120. Receiving terminal 140 may receive content data recorded in content server 112, metadata recorded in metadata server 114, and the license issued from DRM server 116 through the portal server 110. Receiving terminal 140 may be connected to display device 180, a Graphical User Interface (GUI), and an Electronic Content Guide (ECG).

The GUI may offer a screen on which the content data is displayed so that a user may manipulate the content data. The content data may be electronic books, games, and software. The ECG may use metadata to offer a navigation function (i.e. a list of contents downloadable from distribution server 102), a list of contents purchased and viewable on receiving terminal 140, and detailed information about the contents.

Display device 180 may display video signals and may be, for example, a display device of a computer terminal or a television set, an LCD device, a plasma display device, a CRT display device, or a sound output unit that may output sound signals (i.e. a speaker).

Display device 180 is one example of a display and may be connected to receiving terminal 140 to receive data from receiving terminal 140, may reproduce videos and sounds relating to data, and may display the GUI screen and the ECG screen. Video signals, sound signals, and control signals may be sent between receiving terminal 140 and display device 180 and may be received through an interface including, for example, a High-Definition Multimedia Interface (HDMI). In addition, receiving terminal 140 and display device 180 may be configured of discrete component devices or may be a combination device wherein receiving terminal 140 and display device 180 are contained in one piece.

Display device 180 may display the reproduction time limit of the downloaded content data along with the list of the contents purchased and viewable on receiving terminal 140. In addition, display device 180 may display the downloaded content data within the reproduction time limit and may display one or more notices. The notices may, for example, indicate the time remaining for reproduction, that the reproduction time limit is expired, a request for permission to erase the content data, a request for permission to move the content data from the storage section to an external storage section, and that an allowable reproduction period of the content data is not expired. The content data may be erased after a predetermined period (i.e. after expiration of an allowable duration) and may be moved after expiration of an allowable period.

Display device 180 may also display a confirmation indicating that the license is repurchased before the reproduction time limit has expired. Furthermore, display device 180 may display a confirmation indicating that the content data stored in the storage of the receiving terminal 140 is erased or moved to external storage.

Remote controller 190 is one example of a manipulating part that may manipulate receiving terminal 140 and may perform remote control at the distance apart from receiving terminal 140. Remote controller 190 may allow reproduction control of AV player 176 and manipulation on a BML browser or the ECG. The manipulating part for receiving terminal 140 may not be restricted to remote controller 190, which may be a manipulating part disposed on receiving terminal 140.

FIG. 2 illustrates a block diagram of receiving terminal 140. As illustrated in FIG. 2, receiving terminal 140 may contain digital broadcast tuner 142, communication processing part 144, Conditional Access System / DRM (CAS/DRM) client part 146, demultiplexer (DMUX) 148, decoder 150, DRM processing part 152, GUI display processing part 154, CPU 156, and storage 158.

Digital broadcast tuner 142 may receive digital broadcasts (BS, CS, and ground waves) and may output the digital broadcasts to individual functional blocks of receiving terminal 140. Digital broadcast tuner 142 may also receive broadcast signals of digital broadcasts through an antenna line broadcast IF 162. Digital broadcast tuner 142 may be provided on receiving terminal 140, whereby television broadcasts received through an antenna line and television broadcasts in accordance with IP broadcasts may be viewed. By way of an example, receiving terminal 140 does not have to contain digital broadcast tuner 142.

Communication processing part 144 may perform communication control in accordance with the protocols including, for example, Real-time Transport Protocol (RTP), User Datagram Protocol (UDP), Hypertext Transfer Protocol (HTTP) / Transport Layer Security (TLS) in Secure Socket Layer (SSL) (HTTP/TLS), Real Time Streaming Protocol (RTSP), Transmission Control Protocol (TCP), Internet Protocol (IP), and Internet Group Management Protocol/Multicast Listener Discovery (IGMP/MLD). Communication processing part 144 may receive signals through communication IF 164 by, for example, an Ethernet connection and may output the signals to individual functional blocks of receiving terminal 140. Communication processing part 144 may also process streaming data, sent by UDP, to improve jitter caused by network communication by, for example, Forward Error Correction (FEC) processing.

CAS/DRM client part 146 may obtain a license from a CAS server or DRM server 116. CAS/DRM client part 146 may decode received transmission data and content data that are encrypted. CAS/DRM client part 146 may perform contents management of digital broadcasting done in accordance with CAS and may decode content data encrypted in accordance with DRM. In addition, CAS/DRM client part 146 may include a descrambler and a decrypter. CAS/DRM client part 146 may receive data output from digital broadcast tuner 142 or communication processing part 144 and may output the decoded signals to DMUX 148.

DMUX 148 may perform a demultiplexer process. DMUX 148 may receive the decoded signals from CAS/DRM client part 146 and may separate the decoded signals into signals including videos, sounds, subtitles, and Program Specific Information/Service Information (PSI/SI).

Decoder 150 may decode the signals subjected to DMUX 148. Decoder 150 may contain a video decoder that may decode video data, a sound decoder that may decode audio data, and a subtitle data decoder that may decode subtitle data.

DRM processing part 152 may output the video signals and the sound signals that are subjected to DMUX 148 for separation to external storage 160 and may encrypt data including the video signals and the sound signals when data is stored in external storage 160. This encryption process may allow only the appropriate receiving terminal 140 to reproduce content data, which may restrict reproduction by another receiving terminal 140 even though the external storage is connected to the another receiving terminal 140. Data encrypted in DRM processing part 152 may be output to external storage 160 or a removable medium through IF 166 and IF 168. External storage 160 may be a hard disk drive, and the removable medium may be a drive unit for optical disks including, for example, a compact disk or a DVD.

GUI display processing part 154 may perform a reproduction process of data of the video signals decoded in the video decoder and a synthesis process of display data for the browser, EPG, and ECG and may generate data viewable by a user on display device 180. The data generated in GUI display processing part 154 may be output to display device 180 through video/sound output IF 170.

CPU 156 may function as a processor and a control unit by a program, which can control the processes of the individual components provided on the individual servers. CPU 156 may control various applications including the browser activated in receiving terminal 140, the download of the content data, the storage of the downloaded content data, and the reproduction of content data stored in storage 158.

CPU 156 may include a receiving part, a control part, a time limit information requesting part, a confirming part, and a storage control part. The receiving part may receive content data from content server 112 of distribution server 102 and the license including reproduction time limit information sent from DRM server 116.

The control part may reproduce content data when content data stored in storage 158 or external storage 160 can be reproduced based on reproduction time limit information, regardless of the timing or the number of times that reproduction time limit information about the license is stored in storage 158. The time limit information requesting part may send a request for the distribution of reproduction time limit information to the request accepting part of distribution server 102.

The confirming part may confirm with a user if it is necessary to distribute reproduction time limit information before the reproduction time limit is expired. In addition, either after the reproduction time limit is expired, before the storage control part erases content data, or when content data is never reproduced by the control part, the confirming part may confirm with a user whether it is necessary to erase the content data. Furthermore, after the reproduction time limit is expired or before the storage control part moves content data to external storage 160, the confirming part may confirm with a user whether it is necessary to move the content data. Confirmation may be presented to a user by one or more messages or notices displayed on a screen of receiving terminal 140.

The storage control part may output the content data, content metainformation, and license metainformation received in the receiving part to storage 158. In addition, the storage control part may erase the content data, content metainformation, and license metainformation. Furthermore, the storage control part may move the content data, content metainformation, and license metainformation from storage 158 to external storage 160. Receiving terminal 140 may be connected to external storage 160 via an Ethernet, USB, or eSATA connection and the data is protected and moved in accordance with the protocol (i.e. DTCP/IP).

Browser 174 and AV player 176 may be activated by CPU 156. Browser 174 may be a Broadcast Markup Language (BML) browser, which is software that may reproduce contents described in BML. BML may be used to define display control, what, when and where display device 180 is displayed on the screen, descriptions that may describe links showing URLs of related broadcast programs, Internet addresses, titles, and main information, and a user interface such as manipulation buttons. Browser 174 may also display downloadable contents and a list of the contents on display device 180 to allow a user to select contents for downloading. The list of contents stored in storage 158 and already purchased may be displayed to allow a user to select contents desired to reproduce.

AV player 176 may perform a reproduction process of content data such as video data and audio data. For example, AV player 176 may control operations such as the start and stop of reproduction of content data, forward, rewind, and moving chapters.

Memory 157 may be configured of a storage part such as a RAM (Random Access Memory), a ROM (Read Only Memory), and a cash memory, having a function that temporarily stores data relating to the process of the CPU and the CPU's operation programs.

Storage 158 may record content data downloaded in receiving terminal 140 through the download control process and the storage control process in CPU 156. Storage 158 may be configured, for example, of any combination of a HDD (hard disk drive) and flash memory.

Input/output IF 172 may be configured of a manipulating part including a mouse, keyboard, touch panel, buttons, switches, lever, and an input control part that generates input signals and outputs them to the CPU and the other components. For example, a user may manipulate the manipulating part of input/output IF 172 to input data into receiving terminal 140 or to instruct the process operation of receiving terminal 140.

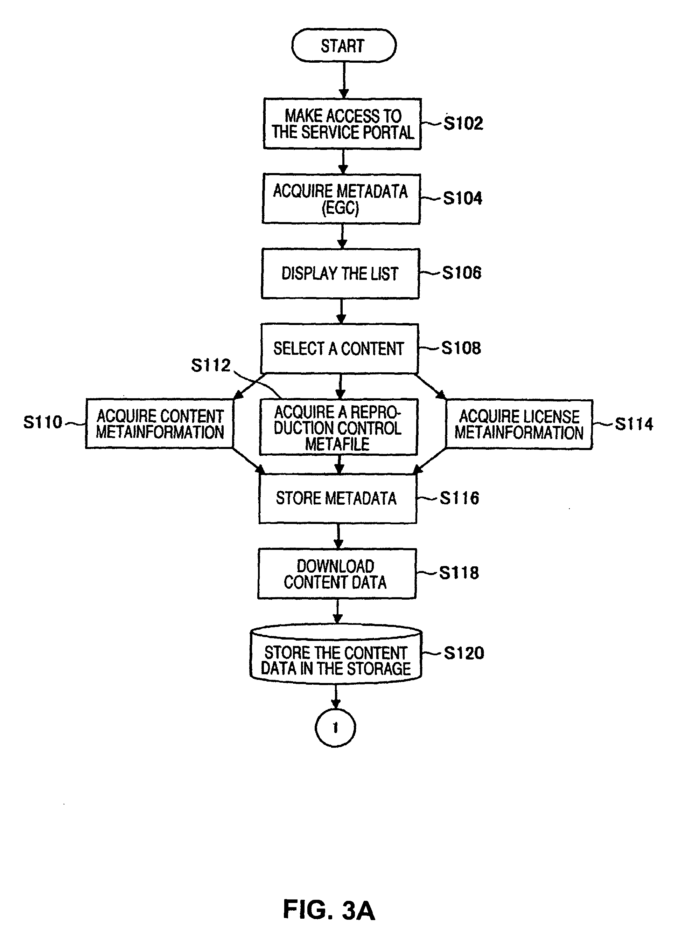

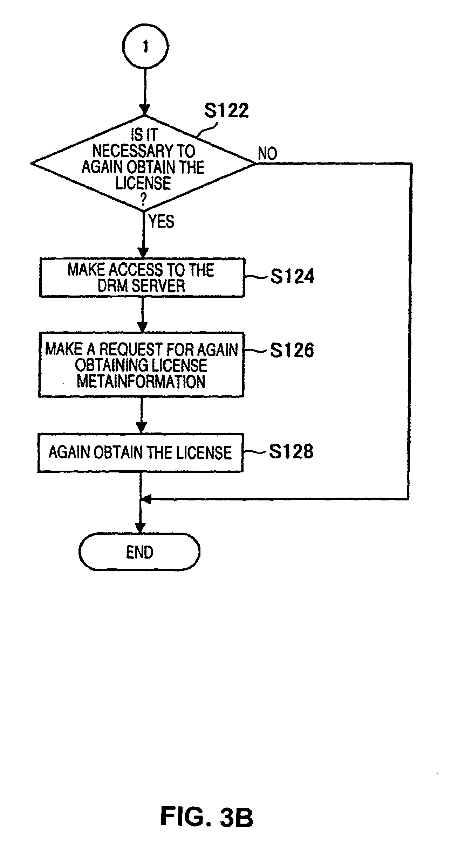

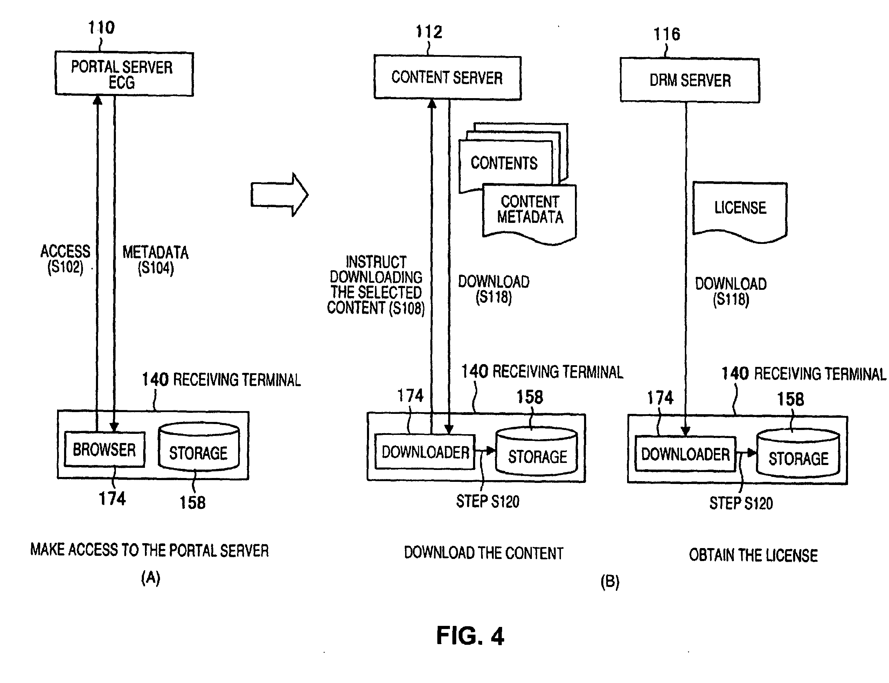

Next, the operation of receiving terminal 140 will be described with reference to FIGs. 3A, 3B, and 4. FIGs. 3A and 3B illustrate flow charts depicting the operation of content distribution system 100. Fig. 4 illustrates the download sequence of content distribution system 100.

Based on manipulation by a user, receiving terminal 140 may access distribution server 102. At this time, receiving terminal 140 may connect to portal server 110 based on a reference link destination (Step S102). If receiving terminal 140 is authenticated by portal server 110, receiving terminal 140 may acquire metadata, which may be data relating to an ECG that may contain the title list of downloadable content data from portal server 110 (Step S104). Subsequently, browser 174 of receiving terminal 140 may depict the list including, for example, the title list of the content data, on display device 180 based on the acquired list (Step S106). The list may allow the user to select content data. Then, the user may select desired content data to download and may request downloading of the content data (Step S108).

Subsequently, based on the download instruction, receiving terminal 140 may access content server 112, metadata server 114, and DRM server 116 through portal server 110. Receiving terminal 140 may acquire content metainformation from metadata server 114 (Step S110), obtain a reproduction control metafile from content server 112 (Step S112), and obtain license metainformation from DRM server 116 (Step S114).

Receiving terminal 140 may perform a storage control process of the acquired reproduction control metafile and may store the reproduction control metafile in storage 158 (Step S116). Subsequently, receiving terminal 140 may request desired content data from content server 112 and may download the content data (Step S118). Receiving terminal 140 may store the downloaded content data in storage 158 (Step S120). After the content data is stored, it may be reproduced when license conditions are satisfied.

As illustrated in FIG. 3B, the confirming part provided on receiving terminal 140 may confirm with the user if it is necessary to obtain the license of the content data again (Step S122). If the license is not needed (i.e. in a case where the reproduction time limit of the license simultaneously downloaded with the content data is not expired), the download operation done by receiving terminal 140 is ended. However, it may be necessary to obtain the license again in a case where the reproduction time limit of the license has expired. According to this example, the time limit information requesting part of receiving terminal 140 may access DRM server 116 (Step S124) and request distribution of the license, including reproduction time limit information, again (Step S126). The request accepting part of DRM server 116 may receive the request for distribution and output a signal to the transmitting part of DRM server 116. The transmitting part may transmit the license to receiving terminal 140, and receiving terminal 140 may again obtain the license from DRM server 116 (Step S128).

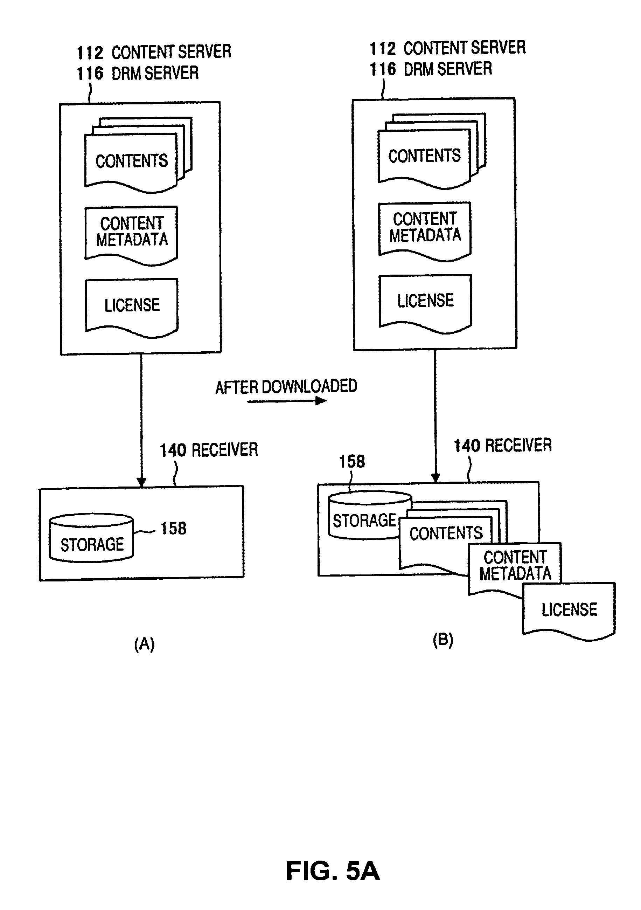

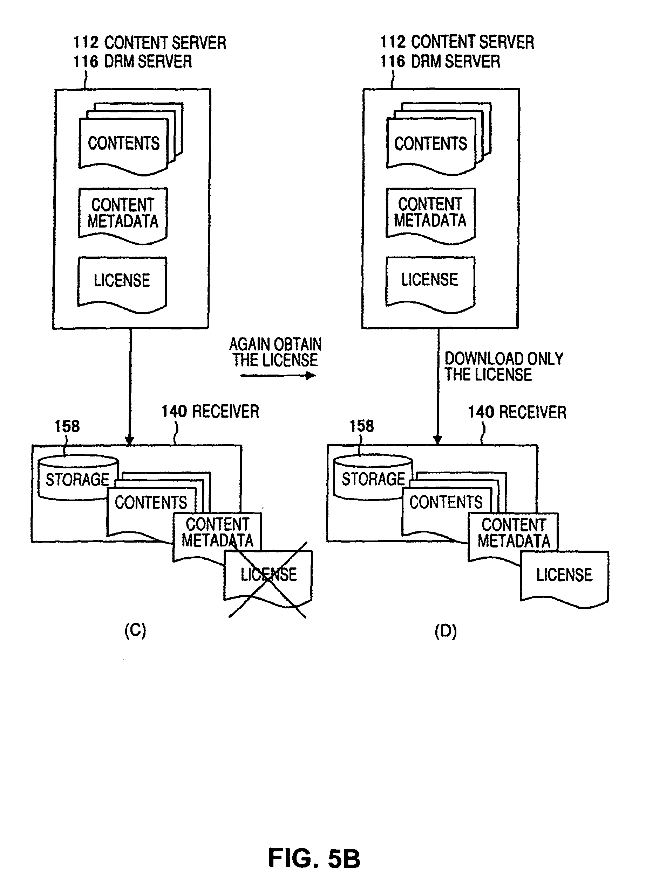

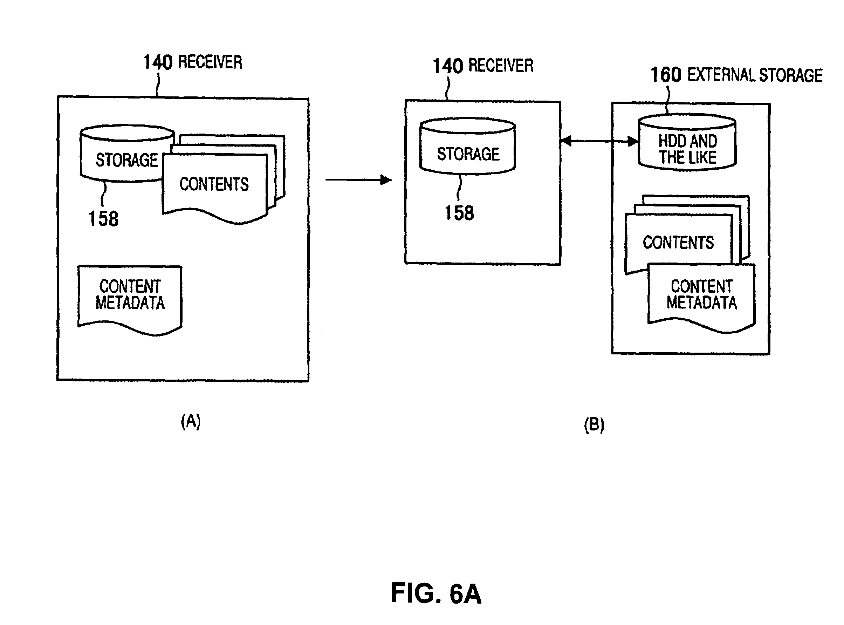

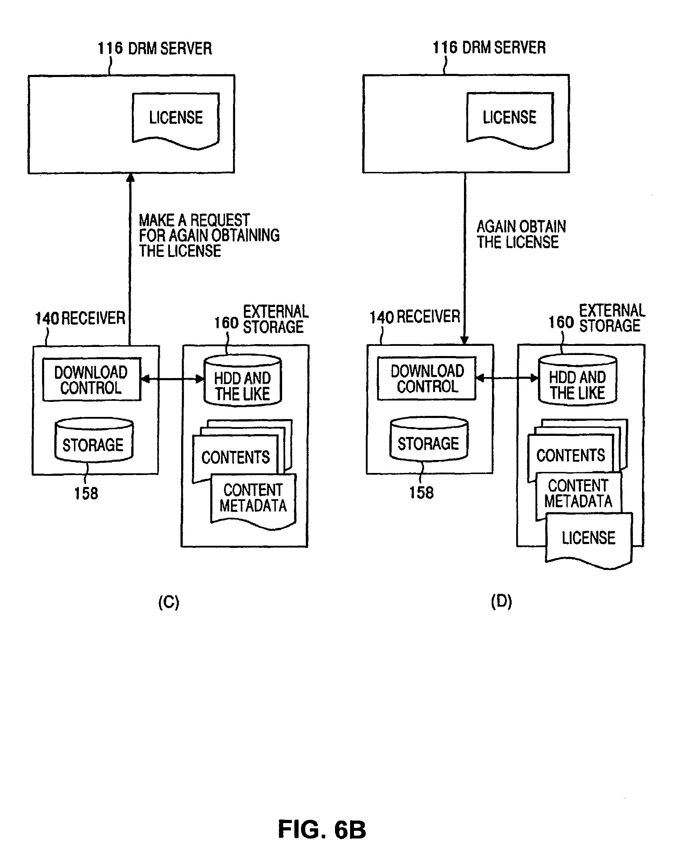

Next, content data management will be described with reference to FIGs. 5A, 5B, 6A, and 6B, which illustrate a sequence of content data management by content distribution system 100.

As illustrated in (A) in Fig. 5A, no reproducible contents are recorded in storage 158 of receiving terminal 140 before receiving terminal 140 downloads content data. When receiving terminal 140 requests the distribution of content data from distribution server 102, content data and content metainformation are downloaded from content server 112 and license metainformation is downloaded from DRM server 116. Subsequently, as illustrated in (B) in Fig. 5A, the content data, content metainformation such as the title relating to the content, and license metainformation including reproduction time limit information may be stored in storage 158 of receiving terminal 140. At this time, receiving terminal 140 may reproduce the content data as long as the reproduction time limit of the license is satisfied. This illustration is exemplary and receiving terminal 140 may request the distribution of content data from content server 112, content metainformation from metadata server 114, and license metainformation from DRM server 116 according to another embodiment.

Subsequently, as shown in (C) in Fig. 5B, when the reproduction time limit of the license has expired, the license stored in storage 158 may be erased from storage 158 by the storage control part of receiving terminal 140. At this time, the content data and content metainformation may remain stored in the storage 158 without being erased. Next, the confirming part provided on receiving terminal 140 may confirm with the user if it is necessary to obtain the license of the content data again. Depending on the user's desire to view the content data, if it is necessary to obtain the license again, the time limit information requesting part may request distribution of the license, and the DRM server 116 may send only the license to receiving terminal 140. Then, as illustrated in (D) in Fig. 5B, the license is again stored in storage 158, and the content data may be reproduced as long as the reproduction time limit of the license is satisfied.

As described above, even though the reproduction time limit of the license once obtained is expired, content data and content metainformation may not be erased. Thus, only the license is obtained again to reproduce content data stored in the storage 158. Therefore, since it is unnecessary to again download content data, the content may be readily viewed within a short period of time.

As illustrated in (A) in Fig. 6A, the content data may remain in storage 158. However, the available capacity of storage 158 decreases because of the stored content data. Therefore, as illustrated in (B) in Fig. 6A, the storage control part of receiving terminal 140 may move the content data and content metainformation to external storage 160. In addition, the storage control part may erase the content data and content metainformation stored in storage 158. Moreover, the confirming part of receiving terminal 140 may confirm with a user if it is necessary to erase or move the content data before the storage control part erases or moves the content data. As described above, the content data may be moved to external storage 160 with no reduction in the capacity of storage 158.

As illustrated in (C) in Fig. 6B, the confirming part provided on receiving terminal 140 may confirm with the user if it is necessary to obtain the license of the content data again. When it is necessary to again obtain the license, the time limit information requesting part may request distribution of the license. Then, as shown in (D) in Fig. 6B, DRM server 116 may transmit only the license to receiving terminal 140, and the license may be stored in external storage 160 or storage 158, not shown, of receiving terminal 140. Consequently, receiving terminal 140 may reproduce content data stored in external storage 160 as long as the reproduction time limit of the license is satisfied.

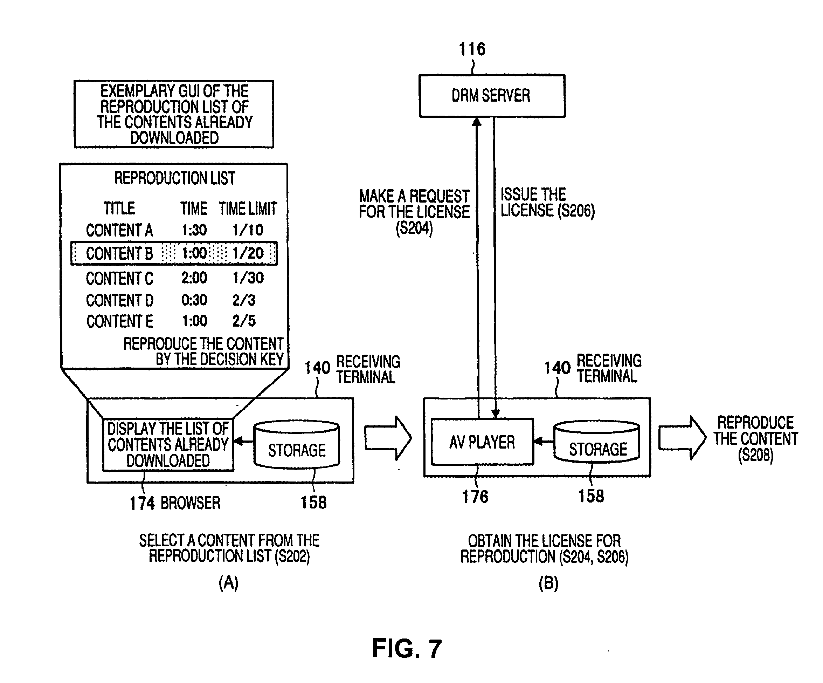

The reproduction operation of the downloaded content data will be described with reference to FIG. 7. Browser 174 may display the list of reproducible content data recorded in storage 158. The list may allow a user to select content data (Step S202).

When a reproducible content is selected, AV player 176 may be activated to reproduce contents. If the license is not stored in storage 158, AV player 176 may request the license, including a reproduction time limit, from DRM server 116 (Step S204). DRM server 116 may determine if receiving terminal 140 satisfies the conditions for issuing the license (i.e. the completion of the purchase process). DRM server 116 may issue the license if the conditions are satisfied (Step S206). After receiving terminal 140 receives the license from DRM server 116, receiving terminal 140 may reproduce content data within the reproduction time limit (Step S208).

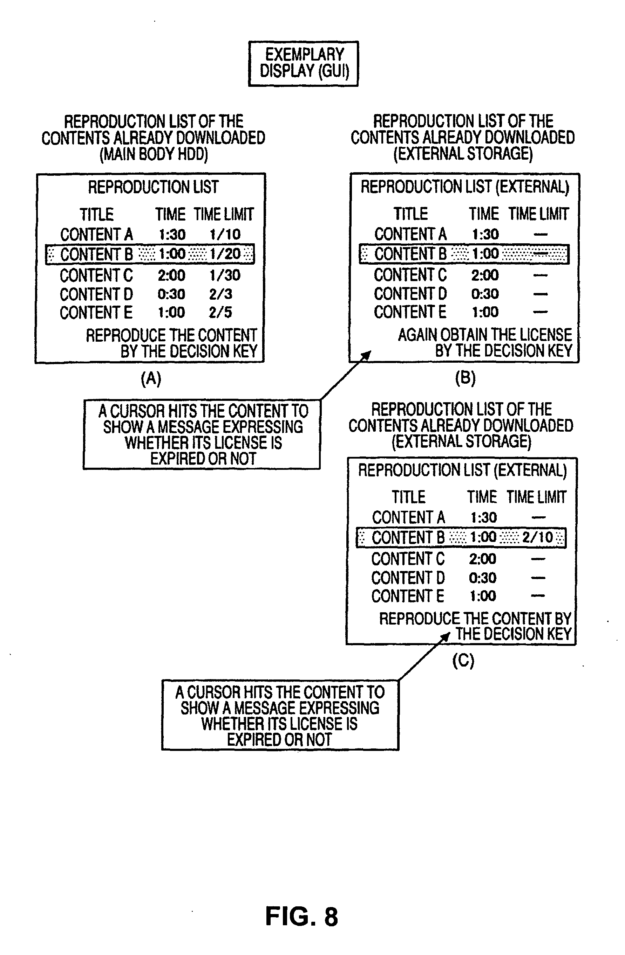

FIG. 8 illustrates an exemplary window displayed on display device 180. As illustrated, titles of downloaded content data stored in receiving terminal 140 may be displayed in a list on the window.

As illustrated in (A), Contents A to Contents E may be, for example, title names of the content that may depict a time period required for reproducing each of the contents and a reproducible time limit (i.e. month and day) based on a license of each content. When a cursor is moved to select content whose license is obtained again, a message "reproduce the content by the decision key" may be displayed on the lower part of the screen. A decision key may be selected to reproduce the content.

(B) and (C) in FIG. 8 illustrate examples when content stored in external storage 160 is displayed in a list. As illustrated in (B), when a cursor is moved to select a content, a message stating "again obtain the license by the decision key" may be displayed on the lower part of the screen. The message may be displayed before the license expires or after the expiration of the license. If the message is selected, receiving terminal 140 may transmit a request to DRM server 116 for the license information without re-sending the content. In response, DRM server 116 may transmit the license information a second time to receiving terminal 140.

As illustrated in (C), when the license is obtained a second time, the reproduction time limit is depicted on the list of the contents. When a cursor is moved to select a content whose license is already obtained again, a message stating "reproduce the content by the decision key" may be displayed on the lower part of the screen. This decision key may be selected to reproduce the content.

The preferred embodiment according to the invention has been described with reference to the accompanying drawings, and it is without saying that the invention is not restricted to these examples. It will be apparent to those skilled in the art that various modifications or alternations can be conceived within the teachings described in the scope of claims, and it should be understood that they of course belong to the technical scope of invention.

The foregoing description has been presented for purposes of illustration. It is not exhaustive and does not limit the invention to the precise forms or embodiments disclosed. Modifications and adaptations of the invention will be apparent to those skilled in the art from consideration of the specification and practice of the disclosed embodiments of the invention. For example, the described implementations include software, but systems and methods consistent with the present invention may be implemented as a combination of hardware and software or in hardware alone. Examples of hardware include computing or processing systems, including personal computers, servers, laptops, mainframes, micro-processors and the like. Additionally, although aspects of the invention are described for being stored in memory, one skilled in the art will appreciate that these aspects can also be stored on other types of computer-readable media, such as secondary storage devices, for example, hard disks, magnetic disks, optical disks, solid state memory, or other forms of RAM or ROM.

Computer programs based on the written description and methods of this invention are within the skill of an experienced developer. The various programs or program modules can be created using any of the techniques known to one skilled in the art or can be designed in connection with existing software.

Moreover, while illustrative embodiments of the invention have been described herein, the scope of the invention includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. Further, the steps of the disclosed methods may be modified in any manner, including by reordering steps and/or inserting or deleting steps, without departing from the principles of the invention. It is intended, therefore, that the specification and examples be considered as exemplary only, with a true scope and spirit of the invention being indicated by the following claims and their full scope of equivalents.

## Claims

1. A content distribution system comprising:
a distribution server for distributing content data and license information corresponding to the content data; and
a receiving terminal, connected to the distribution server via a network, for receiving the content data and the license information, wherein
the distribution server comprises:
a request receiving section for receiving a request from the receiving terminal for the content data; and
a transmitting section for transmitting the content data and the license information, including information regarding a time limit that indicates a period for reproducing the content data, to the receiving terminal; and
the receiving terminal comprises;
a transmitting section for transmitting a request for the content data to the distribution server;
a receiving section for receiving the content data and the license information;
a storage section for storing the content data and the license information; and
a control section for reproducing the content data based on the license information,
wherein the receiving terminal sends a request, in response to a notice indicating the status of the license information, to the distribution server to transmit the license information a second time without transmitting the content data, optionally the notice being displayed before an end of a reproduction period.

2. The content distribution system according to the claim 1, wherein
the storage control section erases the stored content data, preferably after a predetermined period, and
the receiving terminal requests user permission before the storage control part erases the content data.

3. A distribution server for distributing content data to one or more receiving terminals over network, comprising:
a transmitting section for transmitting the content data and license information, including information regarding a time limit that indicates a period for reproducing the content data, to the one or more receiving terminals; and
a request receiving section for receiving, from the one or more receiving terminals, a request for the content data and a request for the license information a second time without the content data,
wherein the request for the license information a second time is transmitted in response to a notice indicating the status of the license information.

4. A receiving terminal for receiving content data from a distribution server, comprising:
a requesting section for sending a first request, the first request being for the content data;
a receiving section for receiving the content data and license information, including information regarding a time limit that indicates a period for reproducing the content data;
a storage section for storing the content data and the license information;
a control section for controlling the reproduction of the content data during a period of reproduction corresponding to the license information; and
a license information requesting section for sending a second request, the second request being for the license information without the content data,
wherein the second request is transmitted in response to a notice indicating the status of the license information.

5. The receiving terminal according to the claim 4, wherein the notice indicates that the second request is needed for reproduction of the content data, the notice preferably being presented before expiration of an allowable period.

6. The receiving terminal according to claim 5 further comprising:
a display section for displaying the notice; and
an input section for receiving a user instruction corresponding to the notice.

7. The receiving terminal according to claim 5 or 6, further comprising:
a display section for displaying the notice,
wherein the storage control section erases the stored content data, optionally the content data that is not reproduced, preferably after a predetermined period.

8. The receiving terminal according to claim 6 or 7, wherein the display section displays a second notice requesting permission to erase the stored content data, preferably after expiration of an allowable duration.

9. The receiving terminal according to claim 8, further comprising:
a display section for displaying a third notice requesting permission to move the content data, optionally the content data which has not been reproduced, from the storage section to an external storage section, preferably after an expiration of an allowable period,
wherein the storage control section moves the content data to the external storage section if permission is received.

10. The receiving terminal according to claim 9, wherein the receiving section receives the license information in response to the second request; and
the control section reproduces the content data in the external storage if the content data is reproducible based on an allowable period of the license information.

11. The receiving terminal according to any one of claims 5 to 10, further
comprising:
a display section, which preferably displays a fourth notice indicating that an allowable reproduction period of the content data has not expired,
wherein the receiving section receives title information of the content data and the display section displays one or more lists of the title information of the content data the display section optionally displaying the title information of expired content data.

12. A method for distributing content data to one or more receiving terminals, comprising:
transmitting the content data and the license information, including information regarding a time limit that indicates a period for reproducing the content data, to the one or more receiving terminals;
receiving, from the one or more receiving terminals, a request for the content data and a request for the license information a second time without the content data; and
transmitting the license information a second time without the content data,
wherein the request to transmit the license information a second time is transmitted in response to a notice indicating the status of the license information.

13. A method for receiving content data from a distribution server, comprising:
sending a first request, the first request being for the content data;
receiving the content data and the license information, including information regarding a time limit that indicates a period for reproducing the content data;
storing the content data and license information;
controlling the reproduction of the content data during a period of reproduction corresponding to the license information; and
sending a second request, the second request being for the license information without the content data,
wherein the second request is transmitted in response to a notice indicating the status of the license information.

14. A computer program capable of execution by a computer and arranged on execution, to cause the computer to perform a method according to claim 12 or 13.

15. A computer readable medium storing a computer program according to claim 14
